# EUROPEAN PATENT APPLICATION

(11) **EP 1 962 457 A2**
(43) Date of publication of application: **27.08.2008**
(21) Application number: 07123214.4
(22) Date of filing: 14.12.2007
(51) Int. Cl.: H04L 12/56

(54) **Wireless communication device and method**

(30) Priority: 23.02.2007 KR 20070018404
(71) Applicant: Samsung Electronics Co., Ltd, Suwon-si, Gyeonggi-do 442-742 (KR)
(72) Inventor: Park, Mi-kyoung, Gyeonggi-do (KR); Han, Yeon-taek, Suwon-si Gyeonggi-do (KR)
(74) Representative: Walaski, Jan Filip

(57) **Abstract**

A wireless communication method and an image device thereof are provided. The wireless communication method includes determining whether a second, already connected, wireless device exists, if a need to establish a connection to a first wireless device exists; requesting whether to release the wireless connection to the second device, if the second wireless device, which is already connected, exists; and maintaining or releasing the wireless connection to the second wireless device according to the requesting. The image device includes a communication module which is wirelessly connected with a first wireless device; and a controller which requests whether to release the connection to a second wireless device, if there is a need to establish a connection to the first wireless device and a second wireless device is already connected, and maintains or releases the wireless connection to the second wireless device according to the request.

## Description

The present invention relates to wireless communication, and more particularly, to wireless communication with peripheral wireless devices.

The recent development of wireless communication and networking technologies has led to the appearance of wireless networks, and wireless communication between wireless devices in the wireless network enables users to utilize various convenient services.

Wireless devices are connected to various other wireless devices in the wireless network, and may wirelessly communicate with various other wireless devices using time division multiplexing (TDM), frequency division multiplexing (FDM) or other techniques.

However, the number of additional wireless devices which are wirelessly connected to wireless devices may be limited due to restrictions imposed by standards of the wireless network and the performance of the wireless devices.

The limitation of the number of additional wireless devices which can be wirelessly connected to wireless devices may be addressed by a method in which wireless devices that are already connected are replaced with wireless devices which can be wirelessly connected. The replacement of wireless devices that are already connected with wireless devices that can be wirelessly connected may involve a process for releasing the wireless connection to wireless devices that are already connected.

However, if the wireless connection to wireless devices that are already connected is unexpectedly released, users may become confused and experience inconvenience. Such confusion and inconvenience may occur particularly when a user is provided with services through a wireless device which becomes disconnected from the wireless network.

The present invention provides a wireless communication method for replacing a wireless device that is already connected, with a new wireless device that a user intends to wirelessly connect after receiving confirmation from the user, and an image device thereof, in order to prevent release of the wireless connection to the already connected wireless device without the user being aware of the release.

According to an aspect of the present invention, there is provided a wireless communication method comprising determining whether a second wireless device, which is already connected, exists, if there is a need, or request, to establish a wireless connection to a first wireless device; asking a user whether to release the wireless connection to the second wireless device, if it is determined that the second wireless device, which is already connected, exists; and maintaining or releasing the wireless connection to the second wireless device according to the user's response.

The asking may comprise providing a graphical user interface (GUI) which enables the user to selectively input one of a command to maintain the wireless connection to the second wireless device and a command to release the wireless connection to the second wireless device.

The GUI may comprise one message from among a message to inform a user that the second wireless device is currently connected wirelessly, a message to inform a user that wireless data communication is currently being performed with the second wireless device, a message to inform a user that the wireless connection to the second wireless device should be released in order to establish the wireless connection to the first wireless device, and a message to inform a user that the wireless connection to the second wireless device should be released in order to perform a specific function selected by the user.

A situation in which there is a need to establish the wireless connection to the first wireless device may comprise one of a situation in which the connection to the first wireless device should be established in order to perform a specific function in response to a user command, a situation in which the user has requested to transmit data to the first wireless device, and a situation in which the user has requested to receive data from the first wireless device.

The maintaining or releasing may comprise establishing a wireless connection to the first wireless device after releasing the wireless connection to the second wireless device, if the user opts to release the wireless connection to the second wireless device.

The maintaining or releasing may comprise maintaining the wireless connection to the second wireless device without establishing the wireless connection to the first wireless device, if the user opts to maintain the wireless connection to the second wireless device.

The wireless connection may be performed using a Bluetooth technique. The first wireless device may be one of a printing apparatus which prints video data received by wireless communication based on the Bluetooth technique and an audio output apparatus which outputs audio data received by wireless communication based on the Bluetooth technique, and the second wireless device may be the other of the printing apparatus and the audio output apparatus.

The number of wireless devices which are wirelessly connected using the wireless communication method at one time may be one or fewer.

According to another aspect of the present invention, there is provided an image device comprising a communication module which is wirelessly connected to enable wireless communication with a first wireless device; and a controller which asks a user whether to release the wireless connection to a second wireless device, if there is a need to establish a wireless connection to the first wireless device through the communication module and it is determined that a second wireless device is already connected through the communication module, and maintains or releases the wireless connection to the second wireless device according to the user's response.

The controller may control such that a graphical user interface (GUI) may be provided which enables the user to selectively input one of a command to maintain the wireless connection to the second wireless device and a command to release the wireless connection to the second wireless device.

The GUI may comprise one message from among a message to inform a user that the second wireless device is currently connected wirelessly, a message to inform a user that wireless data communication is currently being performed with the second wireless device, a message to inform a user that the wireless connection to the second wireless device should be released in order to establish the wireless connection to the first wireless device, and a message to inform a user that the wireless connection to the second wireless device should be released in order to perform a specific function selected by the user.

A situation in which there is a need to establish the wireless connection to the first wireless device may comprise one of a situation in which the connection to the first wireless device should be established in order to perform a specific function in response to a user command, a situation in which the user has requested to transmit data to the first wireless device, and a situation in which the user has requested to receive data from the first wireless device.

The controller may establish the wireless connection to the first wireless device after releasing the wireless connection to the second wireless device, if the user opts to release the wireless connection to the second wireless device.

The controller may maintain the wireless connection to the second wireless device without establishing the wireless connection to the first wireless device, if the user opts to maintain the wireless connection to the second wireless device.

The wireless connection may be performed using a Bluetooth technique. The first wireless device may be one of a printing apparatus which prints video data received by wireless communication based on the Bluetooth technique and an audio output apparatus which outputs audio data received by wireless communication based on the Bluetooth technique, and the second wireless device may be the other of the printing apparatus and the audio output apparatus.

The controller may maintain the number of wireless devices which are wirelessly connected through the communication module at one time at one or fewer.

The above and/or other aspects of the present invention will be more apparent by describing certain exemplary embodiments of the present invention with reference to the accompanying drawings, in which:
FIG. 1 is a view of a Bluetooth network according to an exemplary embodiment of the present invention;
FIG. 2 is a block diagram of a Bluetooth digital television (DTV) according to an exemplary embodiment of the present invention;
FIG. 3 is a flowchart explaining a process by which the Bluetooth DTV shown in FIG. 2 replaces an already connected Bluetooth wireless device with a new wireless device to perform wireless communication after gaining confirmation from the user;
FIGS. 4A and 4B are views explaining in detail a wireless communication method shown in FIG. 2;
FIGS. 5A to 5C are further views explaining in detail a wireless communication method shown in FIG. 2;
FIG. 6 is a block diagram of an image device according to another exemplary embodiment of the present invention; and
FIG. 7 is a flowchart explaining a wireless communication method for replacing a wireless device which is already connected with a new wireless device to perform wireless communication after gaining confirmation from the user, according to another exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

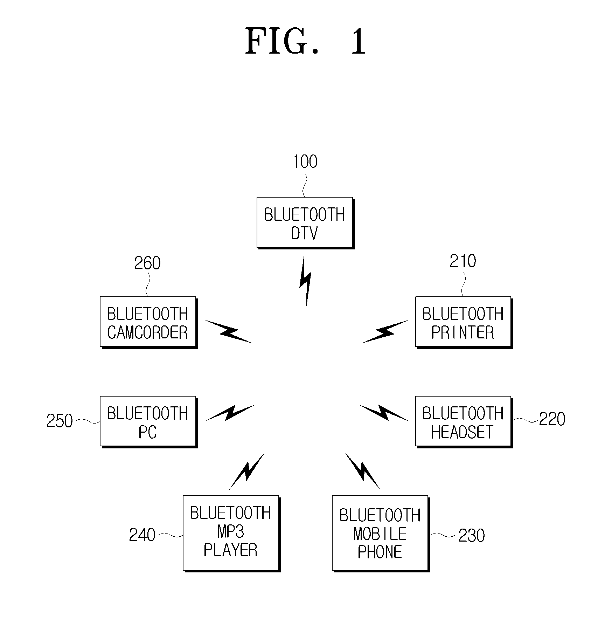

FIG. 1 is a view of a Bluetooth network according to an exemplary embodiment of the present invention. In FIG. 1, the Bluetooth network may be implemented by a Bluetooth DTV 100, a Bluetooth printer 210, a Bluetooth headset 220, a Bluetooth mobile phone 230, a Bluetooth Motion Pictures Experts Group layer 3 (MP3) player 240, a Bluetooth personal computer (PC) 250, a Bluetooth camcorder 260, or other devices.

The Bluetooth DTV 100 may transmit video data relating to a currently displayed image to the Bluetooth printer 210 that is contained in a wireless printing apparatus, so that the video data may be printed through the Bluetooth printer 210. The Bluetooth DTV 100 may also transmit audio data provided from a currently tuned broadcast to the Bluetooth headset 220 that is contained in a wireless audio output apparatus so that the audio data may be output through the Bluetooth headset 220.

Additionally, the Bluetooth DTV 100 may receive video data or audio data from the Bluetooth mobile phone 230, Bluetooth MP3 player 240, Bluetooth PC 250 and Bluetooth camcorder 260, and may output the received data via a display and speakers or may store the received data on a built-in storage medium. Furthermore, the Bluetooth DTV 100 may transmit the data stored in the built-in storage medium to the Bluetooth mobile phone 230 or other device.

Bluetooth wireless devices other than the Bluetooth DTV 100 may transmit and receive data in order to provide various functions to a user.

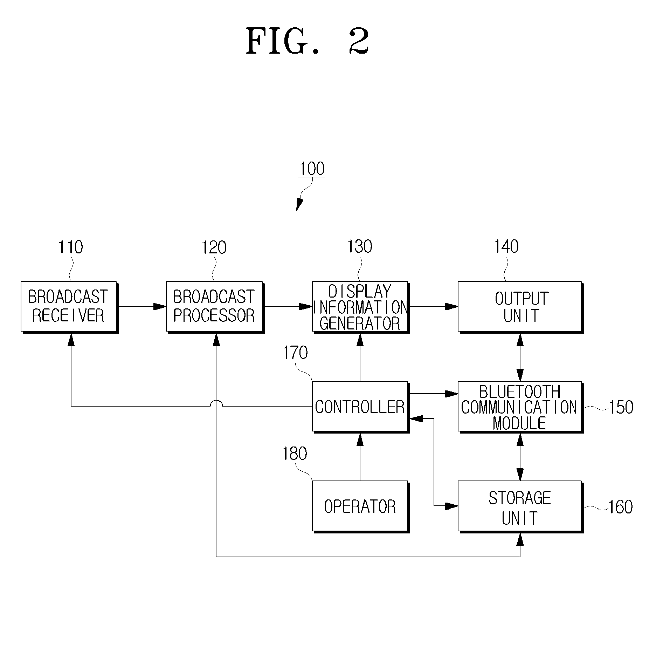

Hereinafter, the Bluetooth DTV 100 shown in FIG. 1 will be described in detail with reference to FIG. 2. FIG. 2 is a block diagram of a Bluetooth DTV according to an exemplary embodiment of the present invention.

The Bluetooth DTV 100 may provide a broadcast received from a broadcasting station to a user, and may also establish the wireless connection so as to wirelessly communicate with the Bluetooth wireless devices, such as the Bluetooth printer 210, the Bluetooth headset 220, the Bluetooth mobile phone 230, Bluetooth MP3 player 240, Bluetooth PC 250 and Bluetooth camcorder 260, which are disposed peripherally around the Bluetooth DTV 100. Accordingly, the Bluetooth DTV 100 may wirelessly transmit data to and receive data from the Bluetooth wireless devices.

The Bluetooth DTV 100 allows a single Bluetooth wireless device to be wirelessly connected. Accordingly, if there is a need to establish a wireless connection to a new Bluetooth wireless device, the Bluetooth DTV 100 may release the wireless connection to the Bluetooth wireless device which is already connected. Before executing the release process described above, the Bluetooth DTV 100 may seek confirmation from the user on whether to release the wireless connection to the Bluetooth wireless device which is already connected.

As shown in FIG. 2, the Bluetooth DTV 100 which performs the above-described functions comprises a broadcast receiver 110, a broadcast processor 120, a display information generator 130, an output unit 140, a Bluetooth communication module 150, a storage unit 160, a controller 170, and an operator 180.

The broadcast receiver 110 tunes to one broadcast from among broadcasts received via a cable or via wireless communication, and demodulates the tuned broadcast. The broadcast processor 120 performs signal processing such as separating the broadcast output from the broadcast receiver 110 into a video signal, an audio signal and a data signal, and decoding the divided video and audio signals.

The display information generator 130 generates display information to be displayed on a display. The generated display information is added to the video output from the broadcast processor 120. This function is known as an on-screen display (OSD) function. The display information generated by the display information generator 130 may comprise a guide message for a user, and a graphical user interface (GUI).

The output unit 140 displays the video combined with the display information output from the display information generator 130 on the display, and outputs the audio output from the broadcast processor 120 through a speaker. The output unit 140 may also output the video and audio to an external display (for example, an external TV) which is connected through an external output terminal.

The Bluetooth communication module 150 wirelessly communicates with the Bluetooth wireless devices 210 to 260 which are disposed peripherally around the Bluetooth DTV 100. The Bluetooth communication module 150 may transmit the audio/video (A/V) output from the output unit 140 to the Bluetooth wireless devices 210 to 260. Additionally, the Bluetooth communication module 150 may transfer data received from the Bluetooth wireless devices 210 to 260 to the storage unit 160, or may transfer the data stored in the storage unit 160 to the Bluetooth wireless devices.

The storage unit 160 may store video data and audio data, and read the stored data to provide the data to the broadcast processor 120 or the Bluetooth communication module 150.

The controller 170 controls the operation of the Bluetooth DTV 100 according to the user operation commands input through the operator 180. The operator 180 may be implemented with a remote controller, and a light receiving element for transmitting user operation commands received by the remote controller to the controller 170.

Additionally, the controller 170 maintains a number of Bluetooth wireless devices which are wirelessly connected through the Bluetooth communication module 150 at one or fewer. In other words, if there is a need to establish a wireless connection to a "new Bluetooth wireless device" (hereinafter, simply referred to as the "new wireless device"), the controller 170 may release the connection to a "Bluetooth wireless device which is already wirelessly connected" (hereinafter, simply referred to as the "already connected wireless device"), and may establish the wireless connection to the new wireless device.

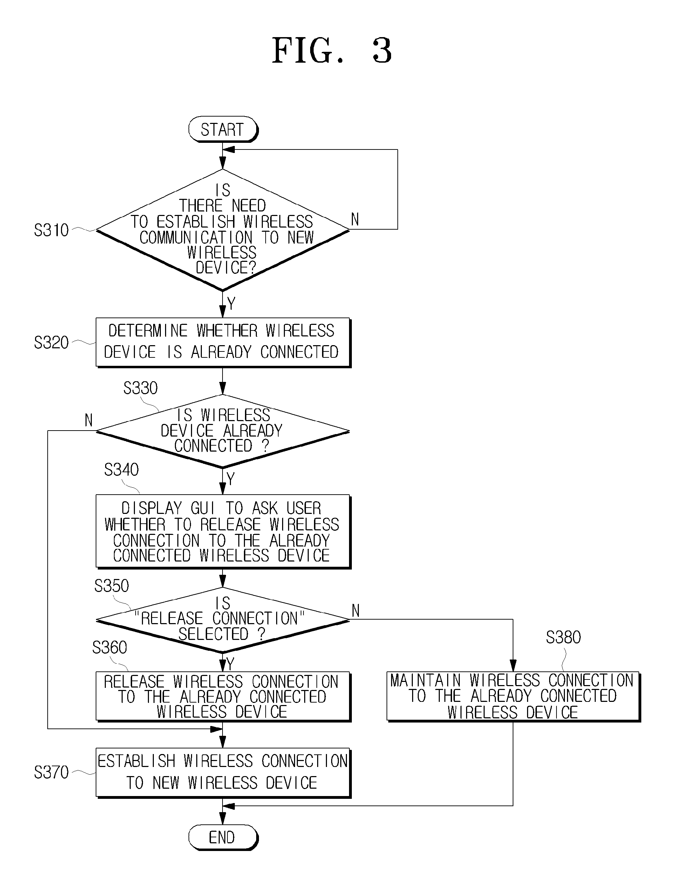

When releasing the connection to the already connected wireless device, the controller 170 may seek confirmation from a user on whether to release the wireless connection to the already connected wireless device, a detailed description of which will be given in detail with reference to FIG. 3. FIG. 3 is a flowchart explaining a process by which the Bluetooth DTV shown in FIG. 2 replaces an already connected Bluetooth wireless device with a new wireless device to perform wireless communication after gaining confirmation from the user.

In FIG. 3, it is determined if there is a need to establish wireless communication to a new wireless device (S310). If there is a need to establish the wireless connection to the new wireless device (S310-Y), the controller 170 may determine whether a wireless device is already connected through the Bluetooth communication module 150 (S320).

A situation in which there is a need to establish a wireless connection to the new wireless device in operation S310 denotes a situation in which the wireless connection to the new wireless device should be established in order to perform a specific function in response to a user command.

For example, if the user inputs a command to print an image currently displayed on the output unit 140 through the operator 180, the new wireless device, namely the Bluetooth printer 210, needs to be wirelessly connected.

Alternatively, if the user inputs a command to output the audio data output from the output unit 140 to the Bluetooth headset 220 through the operator 180, the new wireless device, that is, the Bluetooth headset 220 needs to be wirelessly connected. If it is determined that a wireless device is already connected in operation S320 (S330-Y), the controller 170 may control the display information generator 130 to display on a screen a GUI asking a user whether to release the wireless connection to the already connected wireless device (S340).

The GUI displayed on the screen in operation S340 comprises a GUI which enables the user to selectively input a "command to release the wireless connection to the already connected wireless device" or a "command to maintain the wireless connection to the already connected wireless device".

Additionally, the GUI displayed on the screen in operation S340 may comprise a user guide message. The guide message may be a message to inform a user that a wireless device is already connected, a message to inform a user that wireless data communication is currently being performed with the already connected wireless device, a message to inform a user that the wireless connection to the already connected wireless device should be released in order to establish the wireless connection to the new wireless device, and a message to inform a user that the wireless connection to the already connected wireless device should be released in order to perform a specific function selected by the user.

If the user selects "Release connection" through the GUI displayed in operation S340 (S350-Y), the controller 170 may release the wireless connection to the wireless device which is already connected through the Bluetooth communication module 150 (S360). Additionally, the controller 170 may establish the wireless connection to the new wireless device through the Bluetooth communication module 150 (S370). Accordingly, wireless data communication may be performed between the Bluetooth DTV 100 and the new wireless device.

If the user selects "Maintain connection" through the GUI displayed in operation S340 (S350-N), the controller 170 may maintain the current state of the wireless connection to the wireless device already connected through the Bluetooth communication module 150 (S380). In other words, the controller 170 does not establish the wireless connection to the new wireless device through the Bluetooth communication module 150. Accordingly, wireless data communication may continue between the Bluetooth DTV 100 and the already connected wireless device.

If it is determined that there is no wireless device that is already connected in operation S320 (S330-N), the controller 170 may establish the wireless connection to the new wireless device through the Bluetooth communication module 150 (S370).

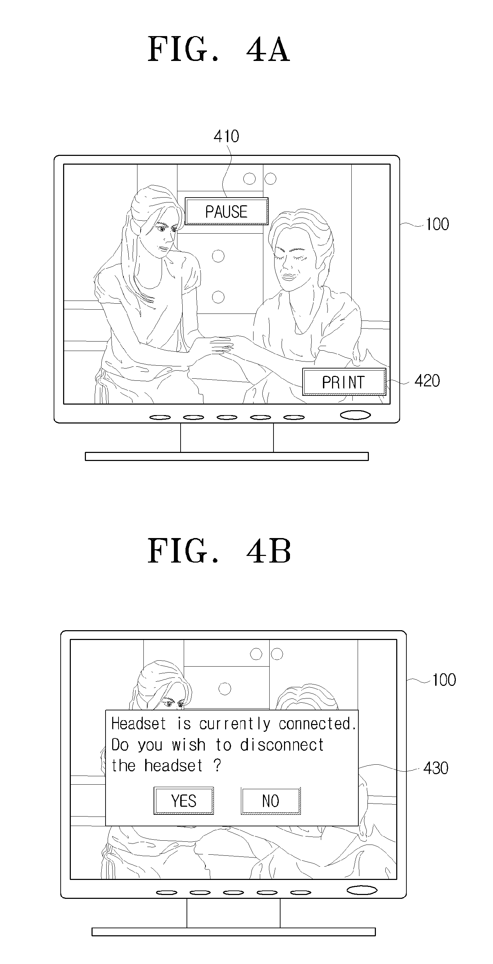

Hereinafter, with reference to FIGS. 4A and 4B, a detailed description will be given in detail of the process by which the Bluetooth DTV shown in FIG. 2 replaces an already connected Bluetooth wireless device with a new wireless device to perform wireless communication after receiving confirmation from the user, as described above.

If the user inputs a command to pause the currently displayed image, the image may be paused as shown in FIG. 4A. Additionally, a "Pause" message 410 to inform the user that the image has been paused, and a "Print" icon 420 to print the paused image in response to a print command may be displayed on the display of the Bluetooth DTV 100.

In this example, a situation in which the user selects the "Print" icon 420 corresponds to a situation in which there is a need to establish the wireless connection to the new wireless device, that is, the Bluetooth printer 210.

Assuming that the Bluetooth DTV 100 is currently connected to the Bluetooth headset 220, a GUI 430 which contains a message asking the user whether to release the wireless connection to the Bluetooth headset 220 ("Do you wish to disconnect the headset?") may be displayed on the display of the Bluetooth DTV 100, as shown in FIG. 4B.

Additionally, as shown in FIG. 4B, items displayed on the GUI 430 comprise "YES" which enables the user to input a command to release the wireless connection to the Bluetooth headset 220, and "NO" which enables the user to input a command to maintain the wireless connection to the Bluetooth headset 220. The GUI 430 may also contain a message to inform a user that a wireless device is already connected, that is, "Headset is currently connected.".

If the user selects "YES" through the GUI 430 shown in FIG. 4B, the wireless connection to the Bluetooth headset 220 (that is, the already connected wireless device) is released, and the wireless connection to the Bluetooth printer 210 (that is, the new wireless device) is established.

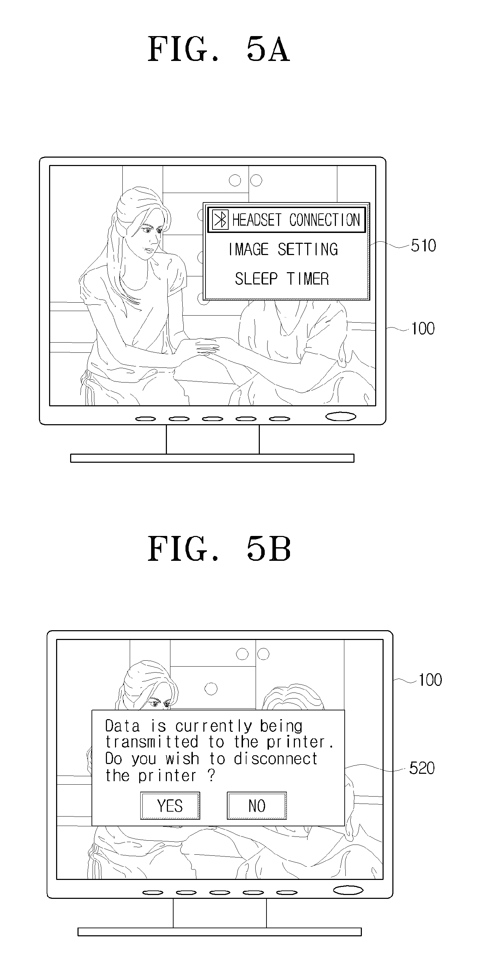

As another example, a situation in which the user selects a "Headset connection" item through a GUI 510 displayed on the display of the Bluetooth DTV 100, as shown in FIG. 5A, also corresponds to the situation in which there is a need to establish the wireless connection to the new wireless device, that is, the Bluetooth headset 220.

Assuming the Bluetooth DTV 100 is currently connected to the Bluetooth printer 210, a GUI 520 which contains a message asking the user whether to release the wireless connection to the Bluetooth printer 210 ("Do you wish to disconnect the printer?") is displayed on the display of the Bluetooth DTV 100, as shown in FIG. 5B.

As shown in FIG. 5B, items displayed on the GUI 520 comprise "YES" which enables the user to input a command to release the wireless connection to the Bluetooth printer 210, and "NO" which enables the user to input a command to maintain the wireless connection to the Bluetooth printer 210. The GUI 520 may also contain a message to inform a user that wireless data communication is currently being performed with the already connected wireless device, that is, "Data is currently being transmitted to the printer."

If the user selects "NO" through the GUI 520 shown in FIG. 5B, the wireless connection to the Bluetooth printer 210 (that is, the already connected wireless device) is maintained. In other words, there is no need to establish the wireless connection to the Bluetooth headset 220 (that is, the new wireless device).

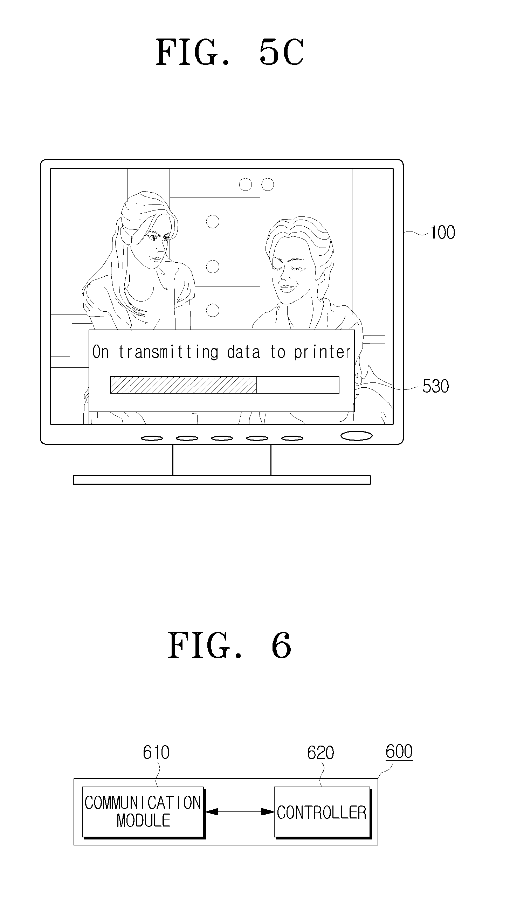

Accordingly, wireless data communication continues between the Bluetooth DTV 100 and the Bluetooth printer 210. As shown in FIG. 5C, a guide window 530 to inform a user of the current data transmission state using a progress bar is displayed on the display of the Bluetooth DTV 100.

The wireless communication method based on the process by which the Bluetooth DTV replaces the already connected Bluetooth wireless device with a new wireless device to perform wireless communication after receiving confirmation from the user was explained in detail above with reference to an exemplary embodiment of the present invention.

In this exemplary embodiment of the present invention, as a situation in which there is a need to establish the wireless connection to the new wireless device, the situation in which the wireless connection to the new wireless device should be established in order to perform a specific function in response to the user command is merely exemplary for convenience of description. Accordingly, the wireless connection to the new wireless device may need to be established in other situations, for example, a situation in which a user has requested to transmit data to the new wireless device, a situation in which a user has requested to receive data from the new wireless device or the like.

Additionally, for convenience of description, the number of Bluetooth wireless devices which are wirelessly connected is limited to one in the exemplary embodiment of the present invention. However, the technical aspect of the present invention may be applied to a situation in which two, three or more Bluetooth wireless devices may be wirelessly connected.

If two or more Bluetooth wireless devices are wirelessly connected, the wireless connection to a Bluetooth wireless device from among the already connected Bluetooth wireless devices may be released by user selection or a preset priority order. However, if a Bluetooth wireless device to be disconnected from the wireless connection is determined by the preset priority order, confirmation from the user on whether to release the wireless connection should be received before releasing the wireless connection.

According to this exemplary embodiment of the present invention, the DTV may wirelessly communicate with the wireless devices by a Bluetooth communication technique, but wireless communication may be performed using wireless communication techniques other than the Bluetooth communication technique. Wireless communication techniques may include a wireless personal area network (WPAN) communication technique, a wireless local area network (WLAN) communication technique or other wireless communication techniques.

A DTV is used as a broadcast receiving apparatus to implement the wireless communication method according to this exemplary embodiment of the present invention, but the technical aspect of the present invention may also be applied to other broadcast receiving apparatuses (for example, a set-top box or a personal computer) in addition to the DTV. Additionally, an image device other than a broadcast receiving apparatus may also be employed in this exemplary embodiment of the present invention.

Additionally, wireless devices other than the wireless devices shown in FIG. 1 may be used as wireless devices connected to the DTV.

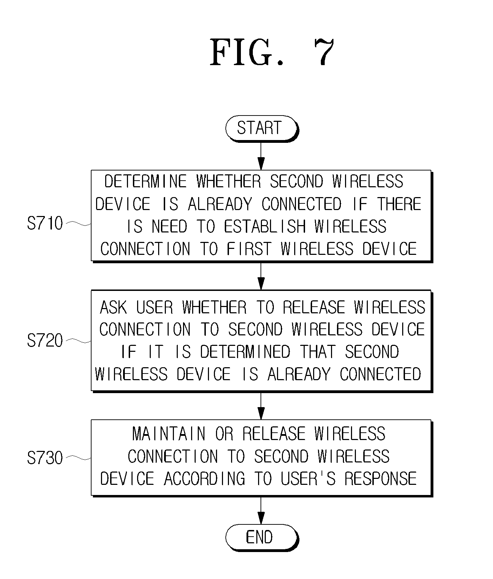

Hereinafter, another exemplary embodiment of the present invention is described in detail with reference to FIGS. 6 and 7. As shown in FIG. 6, an image device 600 according to another exemplary embodiment of the present invention comprises a communication module 610 and a controller 620.

The communication module 610 is wirelessly connected to enable wireless communication with a wireless device. If there is a need to establish the wireless connection to a first wireless device through the communication module 610 and it is determined that a second wireless device is already connected through the communication module 610, the controller 620 may ask a user whether to release the wireless connection to the second wireless device. The controller 620 may then maintain or release the wireless connection to the second wireless device according to the user's response.

According to the wireless communication method of FIG. 7, if there is a need to establish the wireless connection to the first wireless device, the DTV determines whether a second wireless device is already connected (S710). If it is determined that a second wireless device is already connected, the DTV asks the user whether to release the wireless connection to the second wireless device (S720). The DTV may then maintain or release the wireless connection to the second wireless device according to the user's response (S730).

Accordingly, the wireless device performing wireless communication may be replaced after receiving confirmation from the user.

As described above, according to exemplary embodiments of the present invention, it is possible to replace an already connected wireless device with a new wireless device to perform wireless communication after receiving confirmation from the user, so there is no situation in which the wireless connection to the wireless device which is already connected is unexpectedly released without the user's awareness. Accordingly, it is possible to prevent confusion and inconvenience caused by unexpectedly terminating a service being provided to the user without user's approval.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art, while still falling within the scope of the appended claims.

## Claims

1. A wireless communication method for establishing a wireless connection to a first wireless device, comprising:
determining whether a wireless connection to a second wireless device exists, in response to a request to establish a wireless connection to the first wireless device;
if the wireless connection to the second wireless device exists, making a request for information as to whether to release the wireless connection to the second wireless device; and
maintaining or releasing the wireless connection to the second wireless device according to a response to the request.

2. The method as claimed in claim 1, wherein the request for information comprises providing a graphical user interface GUI to enable selective input of one of a command to maintain the wireless connection to the second wireless device and a command to release the wireless connection to the second wireless device.

3. The method as claimed in claim 2, wherein the GUI is arranged to provide a a message that the second wireless device is currently connected wirelessly, or that wireless data communication is currently being performed with the second wireless device, or that the wireless connection to the second wireless device should be released in order to establish a wireless connection to the first wireless device, or that the wireless connection to the second wireless device should be released in order to perform a specific function.

4. The method as claimed in any one of the preceding claims, wherein a request to establish a wireless connection to the first wireless device is made if the connection to the first wireless device should be established in order to perform a specific function in response to a user command, transmission of data to the first wireless device has been requested, or data from the first wireless device has been requested.

5. The method as claimed in any one of the preceding claims, comprising establishing a wireless connection to the first wireless device after releasing the wireless connection to the second wireless device, if the response requests release of the wireless connection to the second wireless device.

6. The method as claimed in any one of the preceding claims, comprising maintaining the wireless connection to the second wireless device without establishing a wireless connection to the first wireless device, if the response requests maintaining the wireless connection to the second wireless device.

7. The method as claimed in any one of the preceding claims, wherein the wireless connection is performed using a Bluetooth technique.

8. The method as claimed in claim 7, wherein
the first wireless device is one of a printing apparatus which prints video data received by wireless communication based on the Bluetooth technique and an audio output apparatus which outputs audio data received by wireless communication based on the Bluetooth technique, and
the second wireless device is the other of the printing apparatus and the audio output apparatus.

9. The method as claimed in any one of the preceding claims, wherein at most one device is wirelessly connected using the wireless communication method at any one time.

10. An image device comprising:
a communication module for establishing a wireless connection to a first wireless device; and
a controller for determining whether a wireless connection to a second wireless device exists in response to a request to establish a connection to the first wireless device, and if the wireless connection to the second wireless device exists, the controller being configured to make a request for information as to whether to release the wireless connection to the second wireless device, the controller being further configured to maintain or release the wireless connection to the second wireless device according to a response to the request.

11. The device as claimed in claim 10, wherein the controller is configured to provide a graphical user interface GUI to enable selective input of one of a command to maintain the wireless connection to the second wireless device and a command to release the wireless connection to the second wireless device.

12. The device as claimed in claim 11, wherein the GUI comprises one message from among a plurality of messages including a message informing that the second wireless device is currently connected wirelessly, a message informing that wireless data communication is currently being performed with the second wireless device, a message informing that the wireless connection to the second wireless device should be released in order to establish the wireless connection to the first wireless device, and a message informing that the wireless connection to the second wireless device should be released in order to perform a specific function.

13. The device as claimed in claim 10, 11 or 12, wherein the image device is arranged to receive a request to establish the wireless connection to the first wireless device if the connection to the first wireless device is required in order to perform a specific function in response to the user command, transmission of data to the first wireless device has been requested, or if reception of data from the first wireless device has been requested.

14. The device as claimed in any one of claims 10 to 13, wherein the controller is arranged to establish the wireless connection to the first wireless device after releasing the wireless connection to the second wireless device, if the response requests release of the wireless connection to the second wireless device.

15. The device as claimed in any one of claims 10 to 14, wherein the controller is arranged to maintain the wireless connection to the second wireless device without establishing the wireless connection to the first wireless device, if the response requests maintaining the wireless connection to the second wireless device.

16. The device as claimed in any one of claims 10 to 15, wherein the wireless connection is performed using a Bluetooth technique.

17. The device as claimed in claim 16, wherein
the first wireless device is one of a printing apparatus which prints video data received by wireless communication based on the Bluetooth technique and an audio output apparatus which outputs audio data received by wireless communication based on the Bluetooth technique, and
the second wireless device is the other of the printing apparatus and the audio output apparatus.

18. The device as claimed in any one of claims 10 to 17, wherein the controller is arranged to limit the maximum number of wireless devices which are wirelessly connected through the communication module at any one time to one device.
